# EUROPEAN PATENT SPECIFICATION

(11) **EP 3 738 430 B1**
(45) Date of publication and mention of the grant of the patent: **14.09.2022**
(21) Application number: 19174505.8
(22) Date of filing: 14.05.2019
(51) Int. Cl.: A01G 23/08, B27B 17/00

(54) **METHOD AND SYSTEM FOR CONTROLLING TOOL**
VERFAHREN UND SYSTEM ZUR STEUERUNG EINES WERKZEUGS
PROCÉDÉ ET SYSTÈME DE COMMANDE D'OUTIL

(43) Date of publication of application: 18.11.2020
(73) Proprietor: Deere & Company, Moline, IL 61265 (US)
(72) Inventor: Alfthan, Arto, 68163 Mannheim (DE); Paakkunainen, Marko, 68163 Mannheim (DE)
(74) Representative: Berggren Oy

(56) References cited:
- EP-A1- 2 719 274
- EP-A1- 2 719 275
- US-A1- 2012 188 089

## Description

### Field of the solution

The present solution relates to a system comprising a control unit for controlling a tree stem processing tool pivotably mounted to an articulated boom connected to a mobile work machine. The present solution relates to a mobile work machine being a forestry machine and comprising the above-mentioned system. The present solution relates to a method for controlling a tree stem processing tool pivotably mounted to an articulated boom connected to a mobile work machine.

### Background of the solution

Mobile work machines, in particular forestry equipment and forestry machines, e.g. harvesters and forwarders, have an articulated boom and a tree stem processing tool at the tip of the boom. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

A potential hazard taking place during a power-driven operation and being associated with the tool including a sawing apparatus is the result of the breaking saw chain of the sawing apparatus during the power-driven operation. The phenomenon is also known as a "chain shot" in which a part, e.g. a link of the saw chain, comes off the sawing apparatus and is propelled from the tool into the surrounding environment. Guards attached to the sawing apparatus eliminate chain shots but there is still a need to reduce the risk of an occasional chain shot hitting an object, e.g. the mobile work machine, and causing any damage. Solutions are needed to avoid the hazards mentioned above and similar hazards.

A system including a control unit applying a calculation model according to the preamble of claim 1 and a corresponding method according to the preamble of claim 9 is disclosed in EP 2719274 A1 or EP 2719275 A1.

### Summary of the solution

The system according to the solution is presented in claim 1. The mobile work machine according to the solution is presented in claim 8. The method according to the solution is presented in claim 9.

The control unit of the system according to the solution is for controlling a tree stem processing tool pivotably mounted to an articulated boom in such a way that orientation of the tool changes when the tool is controllably rotated about a rotation axis that is oriented substantially vertically, the articulated boom being rotatably connected to a mobile work machine.

The control unit is adapted to maintain a calculation model in the control unit, wherein the calculation model relates to either
- i) the control unit being adapted to receive information or data from one or more sensors operably connected to the control unit, the information or data being indicative of the orientation of a predetermined direction coinciding with a predetermined hazard direction or being at a fixed angle in relation to the predetermined hazard direction, in which predetermined hazard direction a piece coming off the tool is expected to fly during a power-driven operation of the tool, or
- ii) the control unit being adapted to receive information or data from the one or more sensors, the information or data being indicative of the orientation of a predetermined hazard trajectory along which the piece is expected to fly during the power-driven operation of the tool,
- or to both i) and ii).

The control unit is adapted to receive from the one or more sensors information or data indicative of the location of a predetermined location; and maintain location data in the control unit, wherein the location data defines the predetermined location that relates to one of the following: the mobile work machine, a geographical place, an object in the vicinity of the tool, or a location in the vicinity of the tool.

The control unit is adapted to automatically determine in the calculation model and on a basis of the location data either
- i) separation prevailing between the predetermined hazard direction and the predetermined location during the power-driven operation of the tool, or
- ii) distance prevailing between the predetermined hazard trajectory and the predetermined location during the power-driven operation of the tool,
- or both i) and ii).

The control unit is adapted to automatically apply a control mode in the control unit in which control mode the power-driven operation of the tool is controlled according to a predetermined dependency in such a way that one or more operating parameters influencing the power-driven operation of the tool vary as a function of the prevailing separation or the prevailing distance.

In the solution, the one or more operating parameters include one or more of the following:
- i) torque generated in an actuator of a sawing apparatus (58) in the tool, the actuator being adapted to drive a saw chain,
- ii) force generated in an actuator of the sawing apparatus, the actuator being adapted to drive a saw blade swinging,
- iii) rotational speed generated in an actuator of the sawing apparatus, the actuator being adapted to drive the saw chain,
- iv) speed generated in an actuator of the sawing apparatus, the actuator being adapted to drive the saw blade swinging.

In the solution, according to the predetermined dependency, the value or magnitude of the one or more operating parameters is adapted to decrease when it is established in the control unit that the prevailing separation or the prevailing distance has been decreased.

In the options i) and ii) above and to which the calculation model relates, the power-driven operation is cross-cutting a tree stem held in a substantially vertical position in the tool or cross-cutting the tree stem held in a substantially horizontal position in the tool.

The mobile work machine according to the solution comprises an articulated boom being rotatably connected to the mobile work machine being a forestry machine, a tree stem processing tool pivotably mounted to the articulated boom in such a way that orientation of the tool changes when the tool is controllably rotated about a rotation axis that is oriented substantially vertically, and the above-mentioned system for controlling the mobile work machine, the articulated boom, and the tool, wherein the mobile work machine is a forwarder for transferring timber or tree stems, or a harvester for harvesting and processing timber or tree stems.

The method according to the solution is for controlling a tree stem processing tool of a mobile work machine. The mobile work machine includes an articulated boom and the tree stem processing tool pivotably mounted to the articulated boom in such a way that orientation of the tool changes when the tool is controllably rotated about a rotation axis that is oriented substantially vertically, the articulated boom being rotatably connected to the mobile work machine having the above-mentioned control unit controlling the mobile work machine, the articulated boom, and the tool, and one or more sensors operably connected to the control unit. The method realizes the above-mentioned calculation model.

### Description of the Drawings

Fig. 1 shows an exemplary mobile work machine;
Fig. 2 shows an overview of the mobile work machine and a tool;
Fig. 3 shows an alternative overview of the mobile work machine and a tool;
Fig. 4 shows a control diagram of one embodiment.
Fig. 5 shows a flow chart of one embodiment;
Fig. 6 shows a control mode of one embodiment;
Fig. 7 shows an alternative overview of the mobile work machine and a tool.

### Detailed Description of the Embodiments

Reference will now be made to the examples of which are illustrated in the accompanying drawings. Wherever possible, the same or corresponding reference numbers will be used throughout the drawings to refer to the same or corresponding parts or features.

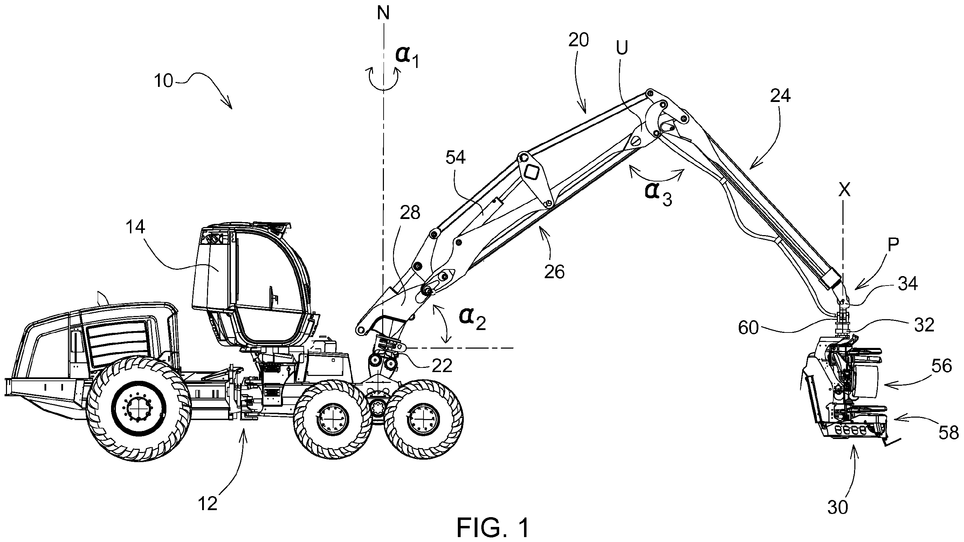

Fig. 1 shows an exemplary mobile work machine 10 in which the presented solution and control unit can be applied. The mobile work machine may be a forestry machine, for example a harvester for harvesting and processing timber or tree stems, as shown in Fig. 1, or a forwarder for transferring timber or tree stems.

The mobile work machine 10 (also referred to herein as a machine, a mobile machine, and a vehicle) comprises a frame 12, an articulated boom 20 (also referred to herein as a boom) on the frame 12, and a control unit 50. The machine 10 may further on the frame 12 comprise a cabin 14 with an operator's station.

The machine 10 may comprise an engine as the source of power. The frame 12 may be articulated and have two or more frame sections connected one after the other by means of a controlled joint. The frame 12 may be wheeled and supported by several wheels. Alternatively, the frame 12 may have an endless track arrangement for supporting the frame 12 and to drive the machine 10. The machine 10 may have a load space located on the frame 12 or on a frame section. The load space may have several bunks for supporting a load. The load space is for carrying logs or tree stems loaded into the load space.

The boom 20 may be mounted onto a slewing apparatus 22 connected to the frame 12 for changing the orientation of the boom 20. By turning the slewing apparatus 22, the boom 20 can be rotated about a rotation axis N that is substantially vertical when the machine 10 stands or moves on the ground that is substantially horizontal. In an example of the solution, the boom 20 with the slewing apparatus 22 may further be mounted on a tilting apparatus connected to the frame 12 for tilting the boom 20 in such a way that the rotation axis N is controllably tilted.

The boom 20 may have two or more boom sections connected one after the other. Two or more boom sections are connected to each other by means of joint arrangements controlled by means of one or several actuators, e.g. a linear actuator or a hydraulic cylinder.

In the example of Fig. 1, the boom 20 may have a base section 28 connected between the slewing apparatus 22 and a second boom section 26. The orientation of the second boom section 26 in relation to the base section 28 is controlled by an actuator 52. The actuator 52 is connected between the base section 28 and the second boom section 26. A first boom section 24 is connected to the second boom section 26. The position of the first boom section 24 in relation to the second boom section 26 is controlled by an actuator 54. The actuator 54 is connected between the second boom section 26 and, either directly or via a joint arrangement, the first boom section 24.

One or more boom sections of the boom 20 may operate telescopically. The extension and the length of the telescopically operating boom section may be controlled by means of two or more boom section parts arranged movably within each other. One or several actuators, e.g. a linear actuator or a hydraulic cylinder, may be used to control the relative positions of the boom section parts. The actuator is connected to the boom section with boom section parts and the actuator is located either inside or outside the boom section.

According to an example and Fig. 1, the first boom section 24 may be arranged telescopically operating in such a way that the first boom section 24 has two boom section parts controlled by at least one actuator, e.g. a linear actuator or a hydraulic cylinder.

In the presented solution, a tree stem processing tool 30 (also referred to herein as a tool) is connected to the boom 20. Preferably, the tool 30 is connected at the end of the boom 20 or the first boom section 24 and represented by the tip P of the boom 20. The tool 30 is rotatably connected to the boom 20 by means of an actuator 32, e.g. a rotary actuator or a rotator. With the actuator 32, the tool 30 suspended from the actuator 32 can be controllably rotated about a rotation axis X that is oriented substantially vertically. The orientation of the tool 30 is thus controlled with the actuator 32.

In this description, orientation refers to the position of a component in question in relation to its surroundings or another component. The orientation may be indicated with a direction associated with the component. The direction may be represented by a direction arrow. Preferably, the direction is observed in such a way that the component represents an origin or a reference point. The orientation or the direction is observed preferably in a substantially horizontal plane.

According to an example and Fig. 1, the actuator 32 may be connected to the boom 20 via a link 34. The link 34 provides free orientation of the actuator 32 and the tool 30 with respect to the boom 20 in such a way that the rotation axis X, the actuator 32, or the tool 30 connected to the actuator 32, can maintain its upright, substantially vertical position.

The tool 30 may be a harvester head, a felling head, a harvesting and processing head, a harvester head suitable to be used as a log grapple, or a log grapple equipped with a sawing apparatus for cross-cutting a tree stem held in the log grapple. According to an example and Fig. 1, the tool 30 is a harvester head for harvesting and processing timber first by grabbing and felling a standing tree and then debranching and cross-cutting the tree stem.

The tool 30, when configured to grab a standing tree from a side and then cross-cutting the standing tree held in the tool 30, needs to be oriented as shown in Fig. 1 i.e. towards the tree standing vertically, e.g. towards right as in Fig. 1. Then, a predetermined side of the tool 30 faces the standing tree.

The tool 30, when configured to debranch and cross-cut a felled tree or cross-cut a tree stem that may be positioned substantially horizontally and is held in the tool 30, is preferably oriented e.g. towards the ground, i.e. downwards.

The tool 30 may include a frame including tilting devices enabling tilting of a housing of the tool 30 to face the standing tree or the ground. The tilting devices are for changing the position of the tool 30 from vertical (see Fig. 1) to horizontal, and vice versa. Thus, when horizontally positioned, the tool 30 can grab logs or process tree stems that are oriented substantially horizontally.

The tool 30 may have two or more arms pivotally connected to the housing of the tool 30 for grabbing a standing tree, a log, or a tree stem e.g. from two opposite sides. A mechanism driven by one or more actuators, e.g. a hydraulic cylinder, is connected to the housing for moving the arms to an open position and a closed position. The arms may be additionally constructed as blades for debranching a tree stem held in the tool 30.

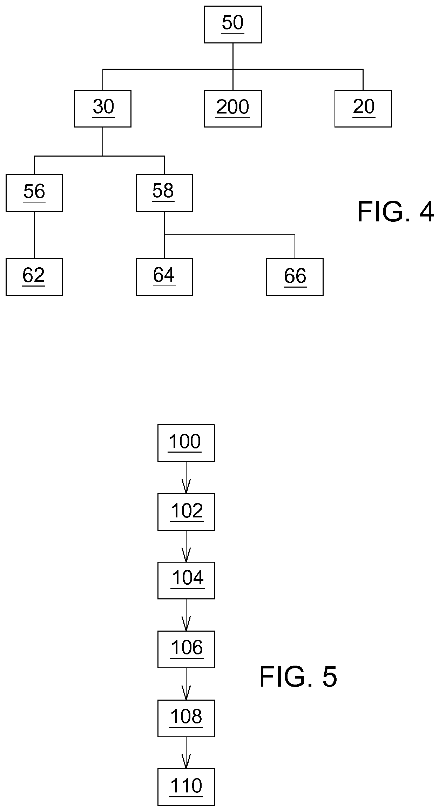

The tool 30 may have a feeding device 56 for transferring a tree stem through the tool 30 while being held in the tool 30. The tree stem is transferred in its longitudinal direction. The feeding device 56 may include one or more feed wheels that contact the tree stem and are adapted to rotate for transferring the tree stem. The feeding device 56 and/or the feed wheel is driven by an actuator 62, e.g. a rotary actuator or a motor, see Fig. 4. The motor may be a hydraulic motor adapted to convert hydraulic pressure and flow into torque and rotational speed for driving the feeding device 56 and/or the feed wheel. The feed wheel may be attached to the arm or housing of the tool 30.

The tree stem is transferred for simultaneously debranching the tree stem by means of the blades and/or for moving the tree stem to a position in which it is cross-cut. The tree stem is held in the tool by the arm and/or the feeding device 56. Preferably, the tree stem is substantially horizontal when being transferred.

The tool 30 may have a sawing apparatus 58 for cross-cutting a standing tree and/or a tree stem held in the tool 30. The sawing apparatus 56 is e.g. a chain saw provided with a saw blade around which a saw chain travels when driven by an actuator 64, e.g. a rotary actuator or a motor, see Fig. 4. The motor may be a hydraulic motor adapted to convert hydraulic pressure and flow into torque and rotational speed for driving the saw chain. The sawing apparatus 58 may include an actuator 66 for swinging the saw blade (see Fig. 4) for performing the cross-cutting, the actuator 66 being adapted to convert hydraulic pressure and flow into force and speed of the saw blade. The saw blade swings in a substantially vertical plane when cross-cutting a tree stem positioned horizontally.

One or more boom sections of the boom 20 operate by raising and lowering the tool 30 or another boom section connected to the boom section. The raising and lowering takes place in a substantially vertical plane. According to an example and Figs 1, the second boom section 26 is pivotably connected to the base section 28. In this way, the height of the end U of the second boom section 26 can be controlled by turning the second boom section 26 about an axis that is substantially perpendicular to the rotation axis N, thus substantially horizontal during operation of the machine 10. The second boom 26 is pivotably connected to the first boom section 24. In this way, the height of the tip P of the first boom section 24 and the boom 20 can be controlled by turning the first boom section 24 about an axis that is substantially perpendicular to the rotation axis N.

One or more control devices, e.g. a joystick, in the cabin 14 or at the operator's station may be used by an operator to move the boom 20, the tip P of the boom, or the tool 30. The control devices may be operably connected with the control unit 50 of the machine 10. A display may be connected to the control unit 50 for showing information and data to the operator. A keyboard or input devices may be connected to the control unit 50 for inputting data and giving instructions by the operator.

The control unit 50 is operably connected with various actuators associated with the boom 20, the tool 30 and other components of the machine 10. Control signals from the control devices are communicated to the control unit 50 and the control unit 50 is operable to responsively control the various actuators, e.g. with the help of a hydraulic circuit, to move and change the position of the boom 20 and the tool 30, rotate the boom 20 to change the orientation of the boom 20, rotate the tool 30 to change the orientation of the tool 30, and operate the devices and apparatuses of the tool 30, e.g. the sawing apparatus 58 and the feeding device 56, for performing work or power-driven operations.

The control unit 50 may a programmable microprocessor-based device with a memory device and associated computer program code, for generating control signals to responsively control the various actuators. The computer program code may be in a form of a control program or a control algorithm, or appropriate computer software, running or being executed under the control of a control computer, i.e. the control unit 50. The associated computer program code may be embodied on a computer readable medium. The control unit 50 may have a distributed configuration with several subunits communicating with each other's. In the context of this description, the term "automatic" refers to control methods performed by the control unit 50 based on input information or data received by the control unit 50, e.g. from sensors 200, and applying a calculation model when analyzing the information and data to provide control modes adapted to control the actuators and associated devices or apparatuses. The control unit 50 utilizes generated control signals to automatically implement the control methods.

The actuators may be hydraulic motors and/or hydraulic cylinders utilizing hydraulic energy, i.e. hydraulic pressure and flow, and pressurized medium which is transmitted to the actuators by means of e.g. lines and flexible hoses. An apparatus needed for generating the hydraulic energy is placed in the machine 10, e.g. in the frame 12 or is operatively connected to the engine 15. Hydraulic energy is distributed e.g. in the form of pressurized medium to the actuators via the hydraulic circuit presenting necessary valves and components for controlling the flow and the hydraulic pressure of the pressurized medium. Some actuators may utilize electric energy stored in an accumulator or generated with a generator operatively connected to the engine. The hydraulic circuit is controlled based on control signals from the control unit 50 under the control of the operator and/or the automatic control of the control unit 50. In this description, the actuators using hydraulic or electrical energy bring about power-driven operations of e.g. the tool 30, the feeding device 56, and/or the sawing apparatus 58.

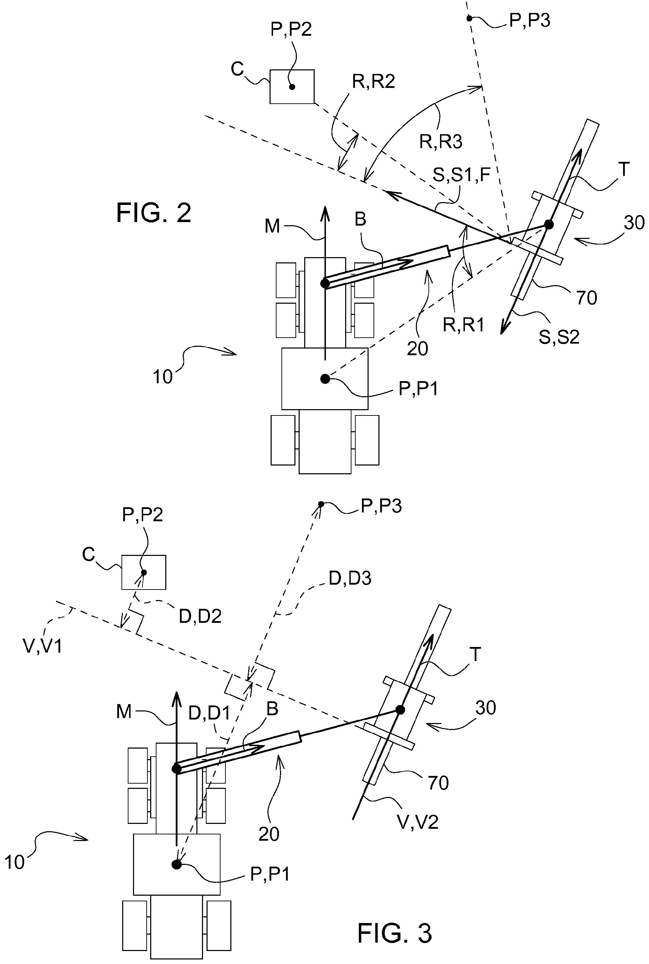

Embodiments of the presented solution will now be discussed with reference to Figs. 2 and 3 in which the tool 30 is oriented substantially horizontally, as discussed above, to cross-cut or feed a tree stem that is being held substantially horizontally in the tool 30. The tool 30 is preferably oriented towards the ground. The method of the presented solution is also discussed with reference to a flow chart in Fig. 5.

Figs. 2 and 3 show a machine 10 having a tool 30 pivotably mounted to a boom 20 on the machine 10. The machine 10 and the boom 20 may be as in the examples explained above or in Fig. 1. The tool 30 may be as in the examples explained above or in Fig. 1. The machine 10 may be a harvester and the tool 30 may be a harvester head.

The tool 30 may have a predetermined main direction T defining e.g. the orientation for the longitudinal direction of the tool 30 or the orientation of the tool 30 in relation to e.g. the boom 20. The main direction T may define the angular orientation, e.g. in a substantially horizontal plane, of the tool 30 in relation to e.g. the boom 20 or the machine 10. A tree stem held 70 in the tool 30 or the longitudinal direction of the tree stem 70 may run parallel with the main direction T. According to an example, the main direction T runs parallel with a substantially horizontal plane.

The tool 30 may have one or more predetermined hazard directions S associated with the tool 30, see Fig. 2. Additionally, or alternatively, the tool 30 may have one or more predetermined hazard trajectories V associated with the tool 30, see Fig. 3.

The hazard direction S may define e.g. the direction in which a piece coming off the tool 30 is expected to fly during a power-driven operation of the tool 30 (see direction S1). The hazard trajectory V may define e.g. the trajectory along which a piece coming off the tool 30 is expected to fly during a power-driven operation of the tool 30 (see trajectory V1). The piece may be a part of the saw chain of the sawing apparatus 58 mentioned above, e.g. a chain link coming off the saw chain that is being driven during the power-driven operation. For example, when hitting a nail in a tree stem that is being cross-cut the saw chain may break and send a chain link flying in the hazard direction S or along the hazard trajectory V. Therefore, the hazard direction S or the hazard trajectory V may be associated with the sawing apparatus 58 of the tool 30. The power-driven operation may include cross-cutting a standing tree or a tree stem 70 held substantially horizontally in the tool 30.

The tool 30 may have, e.g. when horizontal and cross-cutting a horizontal tree stem 70 as shown in Fig. 2 and 3, two or more predetermined hazard directions S or hazard trajectories V contained in a substantially vertical plane. Preferably, the vertical plane and a vertical plane defined by the swinging motion of the saw blade of the sawing apparatus 58 coincide. Additionally, or alternatively, the tool 30 may have, e.g. when vertical as shown in Fig. 1 and cross-cutting a standing tree, two or more predetermined hazard directions S or hazard trajectories V contained in a substantially horizontal plane. Preferably, the horizontal plane and a horizontal plane defined by the swinging motion of the saw blade of the sawing apparatus 58 converge.

Additionally, or alternatively, the hazard direction S may define e.g. the direction in which a tree stem 70 held in the tool 30 is expected to move during a power-driven operation of the tool 30 (see direction S2). The hazard trajectory V may define e.g. the trajectory along which a tree stem 70 held in the tool 30 is expected to move during a power-driven operation of the tool 30 (see trajectory V2). The hazard direction S or the hazard trajectory V may be associated with the feeding device 56 of the tool 30. The power-driven operation may include transferring the tree stem 70 for debranching it or prior to cross-cutting it. The hazard direction S or the hazard trajectory V may run parallel with the longitudinal direction of the tree stem 80 or coincide with it.

According to an example, e.g. in the calculation model mentioned above, the hazard direction S may be represented by a direction that is oriented substantially horizontally. The orientation, the angular orientation, a related distance, or related spacing, e.g. in a substantially horizontal plane, of the hazard direction S may be defined in relation to e.g. the machine 10, the boom 20, the tool 30, and/or a given point or location. The calculation model is maintained in the control unit 50, see step 100 of the method in Fig. 5.

According to an example, e.g. in the calculation model, the hazard trajectory V may be represented by a trajectory which is oriented substantially horizontally. The orientation, the angular orientation, related distance, or related spacing, e.g. in a substantially horizontal plane, of the hazard trajectory V may be defined in relation to e.g. the machine 10, the boom 20, the tool 30, and/or a given point or location.

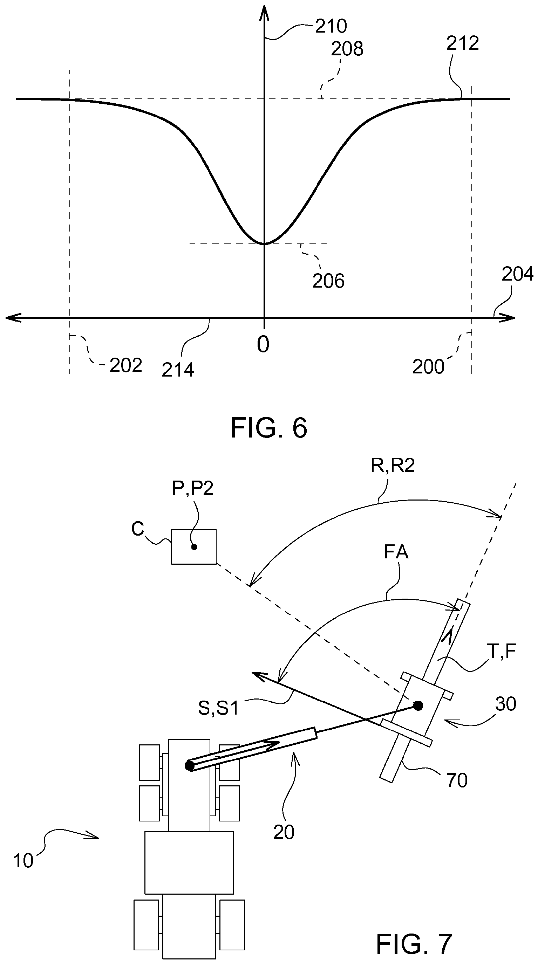

As shown in the examples of Figs. 2 and 7, the hazard direction S may in the calculation model be substituted by a predetermined direction F which is at a fixed angle FA in relation to the hazard direction S, the predetermined direction F and/or the fixed angle FA being observed e.g. in a substantially horizontal plane. The predetermined direction F is associated with the tool 30. For example, the predetermined direction F is the main direction T that is at a fixed angle in relation the predetermined hazard direction S, e.g. when cross-cutting or transferring a tree stem that is substantially horizontal. The fixed angle FA preferably remains unchanged during power- driven operations of the tool 30, the feeding device 56, and/or the sawing apparatus 58.

The above-mentioned predetermined direction F may coincide with the hazard direction S and in that case the hazard direction S may be used as a point of reference in the calculation model, not the predetermined direction F. In this description the hazard direction S is a point of reference but in the examples related to Fig. 2 the hazard direction S may be substituted with the coinciding predetermined direction F without deviating from the presented solution.

The boom 20 may have a predetermined boom direction B defining e.g. the orientation for the longitudinal direction of the boom 20 or the orientation of the boom 20 in relation to e.g. the machine 10 or the longitudinal direction M of the machine 10. The boom direction B may define the angular orientation, e.g. in a substantially horizontal plane, of the boom 20 in relation to e.g. the machine 10. According to an example, the boom direction B runs parallel with a substantially horizontal plane.

According to an example, the boom 20 or the tool 30 may be moved by the operator to one or more initial predetermined orientations in which e.g. the boom direction B, the main direction T, and/or the hazard direction S is set and maintained with the help of the control unit 50. According to an example, the initial predetermined orientation may be such that the hazard direction S is directed towards one or more predetermined locations discussed hereinafter.

In the presented solution, one or more predetermined locations P may be defined to be taken into consideration when the control unit 50 controls a power-driven operation of the tool 30, e.g. the power-driven operations explained above. The power-driven operation may potentially cause a hazard in these locations and therefore risks related to the hazard are reduced with the presented solution.

The predetermined location P may be associated with the machine 10. The predetermined location P may be a location on the machine 10, e.g. the cabin 14 (see location P1), the operator's station, or a point in the frame 12.

Alternatively, or additionally, the predetermined location P may be an object C in the vicinity of the tool 30, or a location (see location P3) in the vicinity of the tool 30. The object C may be a stationary or moving object (see location P2).

Alternatively, or additionally, the predetermined location P may be a geographical place defined as a geographic location, e.g. a position on Earth defined by longitude and latitude, or, a location defined by two coordinates in relation to a predetermined reference point. The predetermined reference point may be stationary or move with the machine 10 and is located e.g. in the tool 30, the cabin 14, or the operator's station.

The predetermined location P may be defined as a location in a polar coordinate system in which the location is determined by a distance from a reference point and an angle from a reference direction. The reference point may be stationary or move with the machine 10 and is located e.g. in the tool 30. The reference direction may be a point of the compass, a predetermined angular orientation of the boom 20 or tool 30 in relation to e.g. the machine 10, the longitudinal direction M, the boom direction B, or the boom 20.

The control unit 50 is adapted to store and maintain location data defining the one or more predetermined locations P. According to an example, the location data indicative of the location of the predetermined location P may be communicated to the control unit 50. According to one example, the operator feeds the location data to the control unit 50 by using e.g. input devices located at the operator's station.

The predetermined point P may be defined as the location in which a predetermined, automatically observable object is situated. The object may be configured to send location data indicative of the location, e.g. the geographic location, of the object to e.g. the control unit 50. The object may include a GNSS module (Global Navigation Satellite System) using e.g. the GPS system (Global Positioning System). Alternatively, the object may be configured to be automatically observable by a detection system adapted to determine the location of the object in relation to the detection system and related location data. The detection system may be in the machine 10, the boom 20, or the tool 30, and is operably connected to the control unit 50. The detection system may include a radar device or a laser scanner device. In a similar manner, one or more of the reference points P mentioned above may be indicated with the help of the automatically observable object.

The location data mentioned above is maintained in the control unit 50, see step 102 of the method in Fig. 5.

In the presented solution, the tool 30 and a power-driven operation of the tool 30 are automatically controlled by the control unit 50 in accordance with the control modes mentioned above. In the control mode the power-driven operation is controlled according to a predetermined dependency in such a way that one or more operating parameters influencing the power-driven operation is varied. The one or more operating parameters are set to vary as a function of a prevailing separation and/or distance.

In the context of this description, the term "operating parameter" refers to a measurable factor that sets conditions of the operation of a system.

The prevailing separation is defined as the separation prevailing between the predetermined hazard direction S and the predetermined location P during the power-driven operation. The prevailing distance is defined as the distance prevailing between the predetermined hazard trajectory V and the predetermined location P during the power-driven operation.

In the corresponding method, the control unit 50 automatically applies the control mode, see step 106 in Fig. 5.

According to an example, the magnitude or extent of the prevailing separation and/or distance represents risks related to the power-driven operation, e.g. the risk of a tree stem 70 moving or a piece coming off the tool 30 hitting an object or person situated in the predetermined location P while the tree stem 70 is being moved or cross-cut with the tool 30. The risk increases when the prevailing separation or distance decreases.

In the context of this description, the term "separation" relates to a state of being separated e.g. by an intervening space, and the term "distance" relates to the degree or amount of separation between two points or objects.

The control unit 50 is adapted to automatically determine, by means of the calculation model and on a basis of the location data mentioned above, the prevailing separation and/or distance. The determination takes place prior to or during the power-driven operation of the tool 30 or may be determined continually. Mathematical equations necessary for the determination may be based on the geometry associated with the tool 30 and related to the location of the predetermined point P. Elementary mathematics known to the skilled person may be applied.

The prevailing separation and/or distance is automatically determined by the control unit 50, see step 104 in the method of Fig. 5, followed by step 106.

The predetermined location P may be represented by a point in a substantially horizontal plane and the prevailing distance or separation may be determined in a substantially horizontal direction or along the same, substantially horizontal plane or another substantially horizontal plane.

For example, as shown in Fig. 2, the prevailing separation may be represented by the relative angle R between the hazard direction S, or the hazard trajectory V, and the location of the predetermined location P. In other words, the relative angle R equals the angle between the hazard direction S, or the hazard trajectory V, and another direction turned towards the predetermined location P. Preferably, the relative angle R in a substantially horizontal plane is determined. The hazard direction S and the other direction are preferably associated with a common origin or reference point that is located e.g. in the tool 30, the feeding device 56, or the sawing apparatus 58. In Fig. 2, relative angles R1, R2 and R3 represent the relative angle R in relation to the predetermined locations P1, P2 and P3, respectively.

For example, as shown in Fig. 3, the prevailing distance may be represented by the distance D between the hazard trajectory V and the location of the predetermined location P. In other words, the distance D may equal the perpendicular distance between the hazard trajectory V, or a point along the hazard trajectory V, and the predetermined location P, e.g. measured along a line that may be perpendicular to one or both of the hazard trajectory V and the location of the predetermined point P. In Fig. 3, distances D1, D2 and D3 represent the distance D in relation to the predetermined locations P1, P2 and P3, respectively.

According to an example, the one or more operating parameters are additionally set to vary as a function of the distance prevailing between the predetermined location P and the tool 30, the sawing apparatus 58, or the feeding apparatus 56, e.g. measured along a line in a substantially horizontal plane.

According to an example, the operating parameter is related to a power-driven operation of the tool 30, the sawing apparatus 58, or the feeding apparatus 56. According to another example, the operating parameter is more specifically related to an actuator of the sawing apparatus 58, e.g. the actuator 64 driving the saw chain of the sawing apparatus 58, or an actuator of the feeding device 56, e.g. the actuator 62 driving the feeding device 56 or the feed wheel of the feeding device 56.

More specifically and according to an example, the operating parameter is the torque generated in the actuator, e.g. a rotary actuator or a motor. The torque generated in a hydraulic motor used as the actuator is decreased by decreasing the hydraulic pressure in the hydraulic circuit, and increased by increasing the hydraulic pressure, by means of the hydraulic circuit mentioned above.

More specifically and according to an example, the operating parameter is the rotational speed of the saw chain or feed wheel effected by the actuator and controlled e.g. by controlling flow of pressurized medium into the actuator. The rotational speed effected by the actuator is decreased by decreasing the flow in the hydraulic circuit, and increased by increasing the flow, by means of the hydraulic circuit mentioned above or the actuator when being e.g. a variable-displacement hydraulic motor.

According to yet another example, the operating parameter is related to the actuator 66 of the sawing apparatus 58, the actuator 66 swinging the saw blade for performing cross-cutting.

More specifically and according to an example, the operating parameter is the speed of the swinging saw blade effected by the actuator 66 and controlled e.g. by controlling in the hydraulic circuit the flow of pressurized medium into the actuator 66. The speed generated with the actuator 66 is decreased by decreasing the flow, and increased by increasing the flow, by means of the hydraulic circuit mentioned above.

More specifically and according to an example, the operating parameter is the force effected by the saw blade and saw chain while pressing against a tree stem, which force is generated by the actuator 66 adapted to swing the saw blade, and controlled e.g. by controlling the pressure of the pressurized medium in the actuator 66. The force generated by means of the actuator 66 is decreased by decreasing the pressure, and increased by increasing the pressure, by means of the hydraulic circuit.

Regarding the saw chain, the probability of the event that the saw chain breaks or sends a piece of the saw chain flying during a power-driven operation of the sawing apparatus 58 diminishes when the torque, the rotational speed, the generated speed, or the generated force as explained above decreases. Additionally, the decreased rotational speed means decrease in the kinetic energy of the piece when compared to a typical, higher rotational speed.

Regarding the feeding device 56, the decreased rotational speed means decrease in the speed and kinetic energy of the tree stem 70 that is being moved with the feeding device 56 when compared to a typical, higher speed. Additionally, the lowered speed gives the operator more time to react in a potentially hazardous situation in which the tree stem 70 moves in the vicinity of the object or person situated in the predetermined location P.

According to an example of the presented solution and as shown in Fig. 6, in the sawing device 58 or in the feeding device 56, and according to the examples presented above, the magnitude or value 212 of the operating parameter is changed when it is established in the control unit 50 that the prevailing separation or distance has been decreased e.g. in such a way that the relative angle or distance in relation to the predetermined location P has decreased. Preferably, the change results in a change in the rotational speed or torque driving the saw chain or feed wheel.

In Fig. 6, the prevailing separation or distance is represented by the horizontal axes 202 and 204, each axis representing the moduli of magnitudes or values, e.g. absolute or relative, of the prevailing separation or distance. The prevailing separation or distance increases in the direction shown by each axis 202, 204. The vertical axis 210 represents magnitudes or values, e.g. absolute or relative, related to the operating parameter. The magnitudes or values increase in the direction shown by the axis 210. The origin O represents magnitudes or values equalling zero, e.g. zero speed, zero torque, zero force, zero relative angle, zero distance, or the predetermined point P and the hazard direction S being aligned.

According to an example of the presented solution, in the sawing apparatus 58 or feeding device 56, and according to the examples presented above, the torque, the rotational speed, the generated force, or the generated speed is decreased when it is established in the control unit 50 that the prevailing separation or distance has been decreased e.g. in such a way that the above-mentioned relative angle or distance in relation to the predetermined location P has decreased. According to an example, the torque, the rotational speed, the generated force, or the generated speed decreases with the decreasing relative angle or distance. That is, the smaller the relative angle or the distance is, the lower the torque, the rotational speed, the generated force, or the generated speed is. According to another example, the torque, the rotational speed, the generated force, or the generated speed is decreased to a lower level, e.g. to a level lower than a default or nominal value 208 (see e.g. a magnitude or value 206).

According to an example, the above-mentioned decrease may take place when the relative angle, preferably the modulus of the value of the relative angle, or the distance equals or is less than a predetermined threshold value 200, 202, e.g. 10°, 20°, or 30° for the relative angle. Outside this range or with values above the predetermined threshold value 200, 202 the operating parameter in question may follow the default or nominal value 208.

In a case in which the hazard direction S is substituted by the above-mentioned predetermined direction F, e.g. the main direction T, the predetermined threshold values 200, 202 may differ in value from each other. Alternatively, or additionally, in that case the origin O may represent a value that equals the above-mentioned fixed angle FA between the predetermined direction F and the hazard direction S. However, when the above-mentioned relative angle equals the fixed angle FA, the predetermined point P and the hazard direction S are aligned.

The examples above relating to decreasing the value of the operating parameter in question when applying the above-mentioned control mode, relating to one or more operating parameters, is depicted in step 108 of the method in Fig. 5.

In the examples above the operating parameter (e.g. the torque, the rotational speed, the generated force, or the generated speed), or the magnitude or value 212 of it, may be decreased and/or kept at the above-mentioned lower level when it is established that the prevailing separation or distance is within a predetermined range. Within this predetermined range the magnitude or value of the operating parameter is decreased to the above-mentioned lower level or to a level lower than outside the predetermined range. The predetermined range may be represented by the range between the predetermined threshold values 200, 202.

In the examples above, the operating parameter, or the magnitude or value 212 of it, preferably changes in a continuous manner when it is decreasing with the prevailing separation or distance that is decreasing.

Preferably, in the examples above, the operating parameter, or the magnitude or value 212 of it, decreases at its lowest to a magnitude or value 206 that guarantees continuation of the power-driven operation in question e.g. without stopping it. That is, e.g. without setting the magnitude or value 212 to zero, or, maintaining the magnitude or value 212 at the above-mentioned lower level or a level (see the magnitude or value 206 in Fig. 6) in which the torque generated, the rotational speed, the generated force, or the generated speed is active or goes on.

Preferably, the magnitude or value 212 of the operating parameter is at its lowest when the prevailing separation or distance is at its minimum.

In the examples above, to guarantee continuation of the power-driven operation, the rotational speed or the torque is maintained at a level that keeps the saw chain or the tree stem moving, or, the generated force or the generated speed is maintained at a level that keeps saw blade moving to cross-cut a tree stem.

The maintaining of the magnitude or value at the level mentioned above, or at its lowest, when applying the above-mentioned control mode, is depicted in step 110 of the method in Fig. 5.

In relation to the examples presented above, for receiving data or information indicative of e.g. the orientation or location of the tool 30, the hazard direction S, the hazard trajectory V, the boom 20, the machine 10, the cabin 14, or the operator's station, one or more sensors 200 may be in use.

The sensors 200 are operably connected to the control unit 50 and e.g. electric signals from the sensors 200 are communicated to the control unit 50. The control unit 50 is able to determine the orientation or location mentioned above on the basis of the received data or information and the calculation model mentioned above. The determination may be based on mathematical equations related to the geometry of the machine 10 and its various components, e.g. the boom 20 and the tool 30. In the above, the sensor may be a device arranged to measure a value. The sensor may actively send, via a wire or wirelessly, information or data to the control unit 50.

An exemplary arrangement of the sensors 200 is presented referring to Fig. 1 showing the boom 20. The arrangement may comprise an orientation sensor 60 arranged to determine the orientation of the tool 30 e.g. with respect to the boom 20. The orientation sensor 60 may be in or at the actuator 32. The orientation of the actuator 32 sensed by the orientation sensor 60 may be dependent on the orientation of the tool 30. Thus, the orientation of the tool 30 or the hazard direction S may be determined by the orientation sensor 60. The output of the orientation sensor 60, i.e. information or data indicative of the orientation of the tool 30, may be used in the control unit 50.

Additionally, the tool 30 may include a position sensor arranged to determine the location, e.g. the geographic location, of the tool 30, the sawing apparatus 58 and/or the feeding device 56, with respect to e.g. the actuator 32, the boom 20, the slewing apparatus 22, the machine 10, the cabin 14, or the operator's station, in which component another position sensor may be in use to determine the location, e.g. the geographic location, of the component. The determination may be based on calculations related to the geometry of the components and carried out e.g. in the calculation model of the control unit. The position sensor may include a GNSS module (Global Navigation Satellite System) using e.g. the GPS system (Global Positioning System). The output of the position sensor, i.e. information or data indicative of the location of the tool 30 and/or the component, may be used in the control unit 50.

As will be detailed below, the position of the boom 20 and the location of e.g. the tip P of the boom 20 or the actuator 32 depends on the angular relationships of the boom sections of the boom 20 and the dimensioning of the boom sections, i.e. the length of each boom section. According to an example and Fig. 1, the angular relationships may be represented by using the azimuth angle α₁ of the boom 20 effected by the slewing apparatus 22, the altitude angle α₂ of the second boom section 26, and the angle α₃ between the first and second boom sections 24 and 26. The altitude angle α₂ represents the angle between the base section 28 and the second boon section 26 or the altitude angle of the second boon section 26. Additionally, an altitude angle of the boom 20 or the base section 28 effected by the tilting apparatus may be determined. For example, a point on the rotation axis N may be used as a reference point and additional reference points may be used to determine the absolute or relative position of e.g. the tip P of the boom 20. The angles α_{1,} α₂ and α₃ may be measured e.g. with angular sensors or acceleration sensors. Relating to the examples explained above, one or more of the above-mentioned sensors may be in use.

Several sensors, optionally of different types, can be used in combination. Thus, the information indicative of the quantities mentioned above in the various examples can be provided by at least one, preferably many, sensors chosen from a set of sensors, the set of sensors comprising acceleration, position, velocity, angle, and length sensors. The operational principle of such sensors is wide; e.g. optical, electro-optical, mechanical, electro-mechanical, electrical, and resistive sensors may be used.

The output of the sensors 200 mentioned above may be used in the control unit 50 to determine the attitude and geometry of the boom 20 or when determining e.g. the location or orientation of the tool 30, the sawing apparatus 58, the feeding device 56, the hazard direction S, or the hazard trajectory, with respect to e.g. the machine 10 or the predetermined location P.

In the context of this application the term "substantially vertical" may be substituted with the term "vertical" and the term "substantially horizontal" may be substituted with the term "horizontal". Also, as used herein, the term "substantially" means that the specified parameter may be varied within an acceptable range without deviating from the presented solution as understood by those skilled in the relevant art. In an example, the acceptable range is ±30°, or ±15°, in relation to the horizontal direction perpendicular to the local gravity direction (i.e. the vertical direction).

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality, unless where specifically mentioned.

As used herein, a plurality of items or structural elements may be presented in a common list for convenience. However, these lists should be construed as though each member of the list is individually identified as a separate and unique member.

In the description, numerous specific details are set forth in order to provide a thorough understanding of the present disclosure. It is to be understood that the examples of the disclosure are not limited to the structures disclosed herein, but are extended to equivalents thereof as would be recognized by those skilled in the relevant art.

## Claims

1. A system, comprising
- a control unit for controlling a tree stem processing tool (30) pivotably mounted to an articulated boom (20) in such a way that orientation of the tool changes when the tool is controllably rotated about a rotation axis (N) that is oriented substantially vertically, the articulated boom being rotatably connected to a mobile work machine (10), and
- one or more sensors (200) operably connected to the control unit,
- wherein the control unit (50) is adapted to:
- maintain a calculation model in the control unit, wherein the calculation model relates to either
- i) the control unit being adapted to receive information or data from the one or more sensors (200), the information or data being indicative of the orientation of a predetermined direction (F) coinciding with a predetermined hazard direction (S) or being at a fixed angle (FA) in relation to the predetermined hazard direction (S), in which predetermined hazard direction (S) a piece coming off the tool (30) is expected to fly during a power-driven operation of the tool,
- wherein the power-driven operation is cross-cutting a tree stem held in a substantially vertical position in the tool or cross-cutting the tree stem held in a substantially horizontal position in the tool, or
- ii) the control unit being adapted to receive information or data from the one or more sensors (200), the information or data being indicative of the orientation of a predetermined hazard trajectory (V) along which the piece is expected to fly during the power-driven operation of the tool,
- or to both i) and ii);
- the control unit being adapted to receive information or data from the one or more sensors (200), the information or data indicative of the location of a predetermined location (P);
- maintain location data in the control unit (50), wherein the location data defines the predetermined location (P) that relates to one of the following: the mobile work machine, a geographical place, an object in the vicinity of the tool, or a location in the vicinity of the tool;
- automatically determine in the calculation model and on a basis of the location data either
- i) separation prevailing between the predetermined hazard direction (S) and the predetermined location (P) during the power-driven operation of the tool, or
- ii) distance prevailing between the predetermined hazard trajectory (V) and the predetermined location (P) during the power-driven operation of the tool,
- or both i) and ii); and
**characterized in that** the control unit (50) is adapted to:
- automatically apply a control mode in the control unit in which control mode the power-driven operation of the tool is controlled according to a predetermined dependency in such a way that one or more operating parameters influencing the power-driven operation of the tool vary as a function of the prevailing separation or the prevailing distance;
- wherein the one or more operating parameters include one or more of the following:
- i) torque generated in an actuator of a sawing apparatus (58) in the tool, the actuator being adapted to drive a saw chain,
- ii) force generated in an actuator of the sawing apparatus, the actuator being adapted to drive a saw blade swinging,
- iii) rotational speed generated in an actuator of the sawing apparatus, the actuator being adapted to drive the saw chain,
- iv) speed generated in an actuator of the sawing apparatus, the actuator being adapted to drive the saw blade swinging; and
- wherein according to the predetermined dependency the value or magnitude of the one or more operating parameters is adapted to decrease when it is established in the control unit that the prevailing separation or the prevailing distance has been decreased.

2. The system according to claim 1, wherein the piece is a part of the saw chain in the sawing apparatus, and the saw chain is adapted to move in the sawing apparatus during the power-driven operation of the tool to cross-cut the tree stem.

3. The system according to any one of claims 1 to 2, wherein the prevailing separation is represented by the relative angle between the predetermined hazard direction (S) and the predetermined location (P), whereby the one or more operating parameters are adapted to vary as a function of the relative angle determined by the control unit.

4. The system according to any one of claims 1 to 3, wherein the prevailing distance is represented by a distance between the predetermined hazard trajectory (V) and the predetermined location (P), whereby the one or more operating parameters are additionally adapted to vary as a function of the distance determined by the control unit.

5. The system according to any one of claims 1 to 4 wherein the control mode is adapted to control the power-driven operation of the tool according to the predetermined dependency in such a way that the one or more operating parameters are additionally adapted to vary as a function of a distance prevailing between the predetermined location (P) and the tool (30) or between the predetermined location (P) and the sawing apparatus (58) of the tool, the control unit being adapted to determine the distance.

6. The system according to any one of claims 1 to 5, wherein the decreasing is adapted to take place when it is established in the control unit that the prevailing separation or the prevailing distance equals or is less than a predetermined threshold value.

7. The system according to any one of claims 1 to 6, wherein the value or magnitude of the one or more operating parameters is adapted to decrease at its lowest to a magnitude or value that guarantees continuation of the power-driven operation of the tool.

8. A mobile work machine being a forestry machine, comprising:
- an articulated boom being rotatably connected to the mobile work machine (10),
- a tree stem processing tool (30) pivotably mounted to the articulated boom (20) in such a way that orientation of the tool changes when the tool is controllably rotated about a rotation axis (N) that is oriented substantially vertically,
- the system according to any one of claims 1 to 7 for controlling the mobile work machine, the articulated boom, and the tool,
- wherein the mobile work machine is a forwarder for transferring timber or tree stems, or a harvester for harvesting and processing timber or tree stems.

9. A method for controlling a tree stem processing tool (30) of a mobile work machine (10), the mobile work machine (10) having an articulated boom (20) and the tree stem processing tool (30) pivotably mounted to the articulated boom (20) in such a way that orientation of the tool changes when the tool is controllably rotated about a rotation axis (N) that is oriented substantially vertically, the articulated boom being rotatably connected to the mobile work machine (10) further having a control unit (50) controlling the mobile work machine, the articulated boom, and the tool, and one or more sensors (200) operably connected to the control unit, the method comprising:
- maintaining a calculation model in the control unit, wherein the calculation model relates to either
- i) receiving in the control unit information or data from the one or more sensors (200), the information or data being indicative of the orientation of a predetermined direction (F) coinciding with a predetermined hazard direction (S) or being at a fixed angle (FA) in relation to the predetermined hazard direction (S), in which predetermined hazard direction (S) a piece coming off the tool (30) is expected to fly during a power-driven operation of the tool,
- wherein the power-driven operation is cross-cutting a tree stem held in a substantially vertical position in the tool or cross-cutting the tree stem held in a substantially horizontal position in the tool, or
- ii) receiving in the control unit information or data from the one or more sensors (200), the information or data being indicative of the orientation of a predetermined hazard trajectory (V) along which the piece is expected to fly during the power-driven operation of the tool,
- or to both i) and ii);
- receiving from the one or more sensors (200) information or data indicative of the location of a predetermined location (P);
- maintaining location data in the control unit (50), wherein the location data defines the predetermined location (P) that relates to one of the following: the mobile work machine, a geographical place, an object in the vicinity of the tool, or a location in the vicinity of the tool;
- automatically determining in the calculation model and on a basis of the location data, during the power-driven operation of the tool, either
- i) separation prevailing between the predetermined hazard direction (S) and the predetermined location (P) during the power-driven operation of the tool, or
- ii) distance prevailing between the predetermined hazard trajectory (V) and the predetermined location (P) during the power-driven operation of the tool,
- or both i) and ii); and
**characterized by**:
- automatically applying a control mode in the control unit by controlling the power-driven operation of the tool according to a predetermined dependency is such a way that one or more operating parameters influencing the power-driven operation of the tool varies as a function of the prevailing separation or the prevailing distance;
- wherein the one or more operating parameters include one or more of the following:
- i) torque generated in an actuator of a sawing apparatus (58) in the tool, the actuator being adapted to drive a saw chain,
- ii) force generated in an actuator of the sawing apparatus, the actuator being adapted to drive a saw blade swinging,
- iii) rotational speed generated in an actuator of the sawing apparatus, the actuator being adapted to drive the saw chain,
- iv) speed generated in an actuator of the sawing apparatus, the actuator being adapted to drive the saw blade swinging; and
- applying the control mode by decreasing the value or magnitude of the one or more operating parameters according to the predetermined dependency when it is established in the control unit that the prevailing separation or the prevailing distance has been decreased.

## Patentansprüche

1. System, das Folgendes umfasst:
- eine Steuereinheit zum Steuern eines Baumstammaufarbeitungswerkzeugs (30), das schwenkbar an einem Knickausleger (20) montiert ist, sodass sich die Ausrichtung des Werkzeugs ändert, wenn das Werkzeug steuerbar um eine Drehachse (N), die im Wesentlichen vertikal ausgerichtet ist, gedreht wird, wobei der Knickausleger drehbar mit einer mobilen Arbeitsmaschine (10) verbunden ist, und
- einen oder mehrere mit der Steuereinheit betriebsfähig verbundene Sensoren (200),
- wobei die Steuereinheit (50) für Folgendes angepasst ist:
- Aufrechterhalten eines Berechnungsmodells in der Steuereinheit, wobei sich das Berechnungsmodell darauf bezieht, dass entweder
- i) die Steuereinheit angepasst ist, um Informationen oder Daten von dem einen oder den mehreren Sensoren (200) zu empfangen, wobei die Informationen oder Daten die Ausrichtung einer vorgegebenen Richtung (F), die mit einer vorgegebenen Gefahrenrichtung (S) zusammenfällt oder in einem festen Winkel (FA) mit Bezug auf die vorgegebene Gefahrenrichtung (S) steht, anzeigen und erwartet wird, dass ein sich von dem Werkzeug (30) lösendes Stück während eines mit Motorantrieb durchgeführten Vorgangs des Werkzeugs in der vorgegebenen Gefahrenrichtung (S) wegfliegt,
- wobei der mit Motorantrieb durchgeführte Vorgang das Querschneiden eines Baumstamms, der in einer im Wesentlichen vertikalen Position in dem Werkzeug gehalten wird, oder das Querschneiden des Baumstamms, der in einer im Wesentlichen horizontalen Position in dem Werkzeug gehalten wird, ist, oder dass
- ii) die Steuereinheit angepasst ist, um Informationen oder Daten von dem einen oder den mehreren Sensoren (200) zu empfangen, wobei die Informationen oder Daten die Ausrichtung einer vorgegebenen Gefahrentrajektorie (V) anzeigen und erwartet wird, dass das Stück während des mit Motorantrieb durchgeführten Vorgangs des Werkzeugs entlang der vorgegebenen Gefahrentrajektorie (V) wegfliegt,
- oder sich sowohl auf i) als auch auf ii) bezieht;
- wobei die Steuereinheit angepasst ist, um Informationen oder Daten von dem einen oder den mehreren Sensoren (200) zu empfangen, wobei die Informationen oder Daten den Standort eines vorgegebenen Standorts (P) anzeigen;
- Aufrechterhalten von Standortdaten in der Steuereinheit (50), wobei die Standortdaten den vorgegebenen Standort (P) definieren, der sich auf eines von Folgendem bezieht: die mobile Arbeitsmaschine, einen geografischen Ort, ein Objekt in der Nähe des Werkzeugs oder einen Standort in der Nähe des Werkzeugs;
- in dem Berechnungsmodell und auf der Basis der Standortdaten erfolgendes automatisches Bestimmen entweder
- i) einer Trennung, die zwischen der vorgegebenen Gefahrenrichtung (S) und dem vorgegebenen Standort (P) während des mit Motorantrieb durchgeführten Vorgangs des Werkzeugs vorherrscht, oder
- ii) eines Abstands, der zwischen der vorgegebenen Gefahrentrajektorie (V) und dem vorgegebenen Standort (P) während des mit Motorantrieb durchgeführten Vorgangs des Werkzeugs vorherrscht,
- oder sowohl von i) als auch von ii); und
**dadurch gekennzeichnet, dass** die Steuereinheit (50) für Folgendes angepasst ist:
- automatisches Anwenden eines Steuermodus in der Steuereinheit, wobei der mit Motorantrieb durchgeführte Vorgang des Werkzeugs in dem Steuermodus gemäß einer vorgegebenen Abhängigkeit gesteuert wird, sodass ein oder mehrere Betriebsparameter, die den mit Motorantrieb durchgeführten Vorgang des Werkzeugs beeinflussen, in Abhängigkeit von der vorherrschenden Trennung oder dem vorherrschenden Abstand variieren;
- wobei der eine oder die mehreren Betriebsparameter eines oder mehrere von Folgendem enthalten:
- i) ein in einem Aktor einer Sägevorrichtung (58) in dem Werkzeug erzeugtes Drehmoment, wobei der Aktor angepasst ist, um eine Sägekette anzutreiben,
- ii) eine in einem Aktor der Sägevorrichtung erzeugte Kraft, wobei der Aktor angepasst ist, um ein schwingendes Sägeblatt anzutreiben,
- iii) eine in einem Aktor der Sägevorrichtung erzeugte Drehgeschwindigkeit, wobei der Aktor angepasst ist, um die Sägekette anzutreiben,
- iv) eine in einem Aktor der Sägevorrichtung erzeugte Geschwindigkeit, wobei der Aktor angepasst ist, um das schwingende Sägeblatt anzutreiben; und
- wobei der Wert oder Betrag des einen oder der mehreren Betriebsparameter gemäß der vorgegebenen Abhängigkeit so angepasst ist, dass er verringert wird, wenn in der Steuereinheit ermittelt wird, dass die vorherrschende Trennung oder der vorherrschende Abstand verringert worden ist.

2. System nach Anspruch 1, wobei es sich bei dem Stück um einen Teil der Sägekette in der Sägevorrichtung handelt und die Sägekette so angepasst ist, dass sie sich während des mit Motorantrieb durchgeführten Vorgangs des Werkzeugs zum Querschneiden des Baumstamms in der Sägevorrichtung bewegt.

3. System nach einem der Ansprüche 1 bis 2, wobei die vorherrschende Trennung durch den relativen Winkel zwischen der vorgegebenen Gefahrenrichtung (S) und dem vorgegebenen Standort (P) dargestellt wird, wodurch der eine oder die mehreren Betriebsparameter so angepasst werden, dass sie in Abhängigkeit von dem durch die Steuereinheit bestimmten relativen Winkel variieren.

4. System nach einem der Ansprüche 1 bis 3, wobei der vorherrschende Abstand durch einen Abstand zwischen der vorgegebenen Gefahrentrajektorie (V) und dem vorgegebenen Standort (P) dargestellt wird, wodurch der eine oder die mehreren Betriebsparameter zusätzlich so angepasst werden, dass sie in Abhängigkeit von dem durch die Steuereinheit bestimmten Abstand variieren.

5. System nach einem der Ansprüche 1 bis 4, wobei der Steuermodus so angepasst ist, dass der mit Motorantrieb durchgeführte Vorgang des Werkzeugs gemäß der vorgegebenen Abhängigkeit so gesteuert wird, dass der eine oder die mehreren Betriebsparameter zusätzlich so angepasst werden, dass sie in Abhängigkeit von einem Abstand, der zwischen dem vorgegebenen Standort (P) und dem Werkzeug (30) oder zwischen dem vorgegebenen Standort (P) und der Sägevorrichtung (58) des Werkzeugs vorherrscht, variieren, wobei die Steuereinheit angepasst ist, um den Abstand zu bestimmen.

6. System nach einem der Ansprüche 1 bis 5, wobei die Verringerung so angepasst ist, dass sie erfolgt, wenn in der Steuereinheit ermittelt wird, dass die vorherrschende Trennung oder der vorherrschende Abstand gleich oder kleiner als ein vorgegebener Schwellenwert ist.

7. System nach einem der Ansprüche 1 bis 6, wobei der Wert oder Betrag des einen oder der mehreren Betriebsparameter so angepasst ist, dass er, wenn er am niedrigsten ist, auf einen Betrag oder Wert, der die Fortführung des mit Motorantrieb durchgeführten Vorgangs des Werkzeugs garantiert, verringert wird.

8. Mobile Arbeitsmaschine, bei der es sich um eine Forstmaschine handelt, die Folgendes umfasst:
- einen drehbar mit der mobilen Arbeitsmaschine (10) verbundenen Knickausleger,
- ein Baumstammaufarbeitungswerkzeug (30), das schwenkbar am Knickausleger (20) montiert ist, sodass sich die Ausrichtung des Werkzeugs ändert, wenn das Werkzeug steuerbar um eine Drehachse (N), die im Wesentlichen vertikal ausgerichtet ist, gedreht wird,
- das System nach einem der Ansprüche 1 bis 7 zum Steuern der mobilen Arbeitsmaschine, des Knickauslegers und des Werkzeugs,
- wobei es sich bei der mobilen Arbeitsmaschine um einen Tragrückeschlepper zum Transportieren von Holz oder Baumstämmen oder ein Erntefahrzeug zum Ernten und Aufarbeiten von Holz oder Baumstämmen handelt.

9. Verfahren zum Steuern eines Baumstammaufarbeitungswerkzeugs (30) einer mobilen Arbeitsmaschine (10), wobei die mobile Arbeitsmaschine (10) einen Knickausleger (20) aufweist und das Baumstammaufarbeitungswerkzeug (30) schwenkbar am Knickausleger (20) montiert ist, sodass sich die Ausrichtung des Werkzeugs ändert, wenn das Werkzeug steuerbar um eine Drehachse (N), die im Wesentlichen vertikal ausgerichtet ist, gedreht wird, wobei der Knickausleger drehbar mit der mobilen Arbeitsmaschine (10) verbunden ist, die ferner eine Steuereinheit (50), die die mobile Arbeitsmaschine, den Knickausleger und das Werkzeug steuert, und einen oder mehrere betriebsfähig mit der Steuereinheit verbundene Sensoren (200) aufweist, wobei das Verfahren Folgendes umfasst:
- Aufrechterhalten eines Berechnungsmodells in der Steuereinheit, wobei sich das Berechnungsmodell entweder auf
- i) das Empfangen von Informationen oder Daten in der Steuereinheit von dem einen oder den mehreren Sensoren (200), wobei die Informationen oder Daten die Ausrichtung einer vorgegebenen Richtung (F), die mit einer vorgegebenen Gefahrenrichtung (S) zusammenfällt oder in einem festen Winkel (FA) mit Bezug auf die vorgegebene Gefahrenrichtung (S) steht, anzeigen und erwartet wird, dass ein sich von dem Werkzeug (30) lösendes Stück während eines mit Motorantrieb durchgeführten Vorgangs des Werkzeugs in der vorgegebenen Gefahrenrichtung (S) wegfliegt,
- wobei der mit Motorantrieb durchgeführte Vorgang das Querschneiden eines Baumstamms, der in einer im Wesentlichen vertikalen Position in dem Werkzeug gehalten wird, oder das Querschneiden des Baumstamms, der in einer im Wesentlichen horizontalen Position in dem Werkzeug gehalten wird, ist, oder auf
- ii) das Empfangen von Informationen oder Daten in der Steuereinheit von dem einen oder den mehreren Sensoren (200), wobei die Informationen oder Daten die Ausrichtung einer vorgegebenen Gefahrentrajektorie (V) anzeigen und erwartet wird, dass das Stück während des mit Motorantrieb durchgeführten Vorgangs des Werkzeugs entlang der vorgegebenen Gefahrentrajektorie (V) wegfliegt,
- oder sowohl auf i) als auch auf ii) bezieht;
- Empfangen von Informationen oder Daten, die den Standort eines vorgegebenen Standorts (P) anzeigen, von dem einen oder den mehreren Sensoren (200);
- Aufrechterhalten von Standortdaten in der Steuereinheit (50), wobei die Standortdaten den vorgegebenen Standort (P) definieren, der sich auf eines von Folgendem bezieht: die mobile Arbeitsmaschine, einen geografischen Ort, ein Objekt in der Nähe des Werkzeugs oder einen Standort in der Nähe des Werkzeugs;
- während des mit Motorantrieb durchgeführten Vorgangs des Werkzeugs in dem Berechnungsmodell und auf der Basis der Standortdaten erfolgendes automatisches Bestimmen entweder
- i) einer Trennung, die zwischen der vorgegebenen Gefahrenrichtung (S) und dem vorgegebenen Standort (P) während des mit Motorantrieb durchgeführten Vorgangs des Werkzeugs vorherrscht, oder
- ii) eines Abstands, der zwischen der vorgegebenen Gefahrentrajektorie (V) und dem vorgegebenen Standort (P) während des mit Motorantrieb durchgeführten Vorgangs des Werkzeugs vorherrscht,
- oder sowohl von i) als auch von ii); und
**gekennzeichnet durch**:
- automatisches Anwenden eines Steuermodus in der Steuereinheit durch Steuern des mit Motorantrieb durchgeführten Vorgangs des Werkzeugs gemäß einer vorgegebenen Abhängigkeit, sodass ein oder mehrere Betriebsparameter, die den mit Motorantrieb durchgeführten Vorgang des Werkzeugs beeinflussen, in Abhängigkeit von der vorherrschenden Trennung oder dem vorherrschenden Abstand variieren;
- wobei der eine oder die mehreren Betriebsparameter eines oder mehrere von Folgendem enthalten:
- i) ein in einem Aktor einer Sägevorrichtung (58) in dem Werkzeug erzeugtes Drehmoment, wobei der Aktor angepasst ist, um eine Sägekette anzutreiben,
- ii) eine in einem Aktor der Sägevorrichtung erzeugte Kraft, wobei der Aktor angepasst ist, um ein schwingendes Sägeblatt anzutreiben,
- iii) eine in einem Aktor der Sägevorrichtung erzeugte Drehgeschwindigkeit, wobei der Aktor angepasst ist, um die Sägekette anzutreiben,
- iv) eine in einem Aktor der Sägevorrichtung erzeugte Geschwindigkeit, wobei der Aktor angepasst ist, um das schwingende Sägeblatt anzutreiben; und
- Anwenden des Steuermodus durch Verringern des Werts oder Betrags des einen oder der mehreren Betriebsparameter gemäß der vorgegebenen Abhängigkeit, wenn in der Steuereinheit ermittelt wird, dass die vorherrschende Trennung oder der vorherrschende Abstand verringert worden ist.

## Revendications

1. Système comportant
- une unité de commande destinée à commander un outil (30) de traitement de troncs d'arbres monté de façon pivotante sur une flèche articulée (20) de telle manière que l'orientation de l'outil change lorsque l'outil subit une rotation commandable autour d'un axe (N) de rotation qui est orienté sensiblement verticalement, la flèche articulée étant liée de façon tournante à un engin mobile (10) de travaux, et
- un ou plusieurs capteurs (200) reliés fonctionnellement à l'unité de commande,
- l'unité (50) de commande étant prévue pour :
- maintenir un modèle de calcul dans l'unité de commande, le modèle de calcul se rapportant
- i) soit au fait que l'unité de commande est prévue pour recevoir des informations ou des données en provenance du ou des capteurs (200), les informations ou les données étant indicatives de l'orientation d'une direction prédéterminée (F) coïncidant avec une direction prédéterminée (S) de danger ou se situant à un angle fixe (FA) par rapport à la direction prédéterminée (S) de danger, ladite direction prédéterminée (S) de danger étant celle dans laquelle il est prévu qu'un morceau se détachant de l'outil (30) soit projeté pendant un fonctionnement motorisé de l'outil,
- le fonctionnement motorisé étant le tronçonnage d'un tronc d'arbre maintenu dans une position sensiblement verticale dans l'outil ou le tronçonnage du tronc d'arbre maintenu dans une position sensiblement horizontale dans l'outil,
- ii) soit au fait que l'unité de commande est prévue pour recevoir des informations ou des données en provenance du ou des capteurs (200), les informations ou les données étant indicatives de l'orientation d'une trajectoire prédéterminée (V) de danger suivant laquelle il est prévu que le morceau soit projeté pendant le fonctionnement motorisé de l'outil,
- soit à la fois à i) et ii) ;
- l'unité de commande étant prévue pour recevoir des informations ou des données en provenance du ou des capteurs (200), les informations ou les données étant indicatives de l'emplacement d'un emplacement prédéterminé (P) ;
- maintenir des données d'emplacement dans l'unité (50) de commande, les données d'emplacement définissant l'emplacement prédéterminé (P) qui se rapporte à l'un des éléments suivants :
l'engin mobile de travaux, un lieu géographique, un objet au voisinage de l'outil, ou un emplacement au voisinage de l'outil ;
- déterminer automatiquement dans le modèle de calcul et d'après les données d'emplacement
- i) soit un écart en vigueur entre la direction prédéterminée (S) de danger et l'emplacement prédéterminé (P) pendant le fonctionnement motorisé de l'outil,
- ii) soit une distance en vigueur entre la trajectoire prédéterminée (V) de danger et l'emplacement prédéterminé (P) pendant le fonctionnement motorisé de l'outil,
- soit à la fois i) et ii) ; et
**caractérisé en ce que** l'unité (50) de commande est prévue pour :
- appliquer automatiquement un mode de commande dans l'unité de commande, le fonctionnement motorisé de l'outil étant, dans ledit mode de commande, commandé selon une dépendance prédéterminée de telle manière qu'un ou plusieurs paramètres d'exploitation influençant le fonctionnement motorisé de l'outil varient en fonction de l'écart en vigueur ou de la distance en vigueur ;
- le ou les paramètres d'exploitation incluant un ou plusieurs des paramètres suivants :
- i) un couple généré dans un actionneur d'un appareil (58) de sciage dans l'outil, l'actionneur étant prévu pour entraîner une chaîne de scie,
- ii) un effort généré dans un actionneur de l'appareil de sciage, l'actionneur étant prévu pour entraîner une lame de scie en oscillation,
- iii) une vitesse de rotation générée dans un actionneur de l'appareil de sciage, l'actionneur étant prévu pour entraîner la chaîne de scie,
- iv) une vitesse générée dans un actionneur de l'appareil de sciage, l'actionneur étant prévu pour entraîner la lame de scie en oscillation ; et
- la valeur ou le module du ou des paramètres d'exploitation étant prévus, selon la dépendance prédéterminée, pour diminuer lorsqu'il est établi dans l'unité de commande que l'écart en vigueur ou la distance en vigueur ont été diminués.

2. Système selon la revendication 1, le morceau faisant partie de la chaîne de scie dans l'appareil de sciage, et la chaîne de scie étant prévue pour se déplacer dans l'appareil de sciage pendant le fonctionnement motorisé de l'outil pour tronçonner le tronc d'arbre.

3. Système selon l'une quelconque des revendications 1 à 2, l'écart en vigueur étant représenté par l'angle relatif entre la direction prédéterminée (S) de danger et l'emplacement prédéterminé (P), le ou les paramètres d'exploitation étant ainsi prévus pour varier en fonction de l'angle relatif déterminé par l'unité de commande.

4. Système selon l'une quelconque des revendications 1 à 3, la distance en vigueur étant représentée par une distance entre la trajectoire prédéterminée (V) de danger et l'emplacement prédéterminé (P), le ou les paramètres d'exploitation étant de plus prévus ainsi pour varier en fonction de la distance déterminée par l'unité de commande.

5. Système selon l'une quelconque des revendications 1 à 4, le mode de commande étant prévu pour commander le fonctionnement motorisé de l'outil selon la dépendance prédéterminée de telle manière que le ou les paramètres d'exploitation soient de plus prévus pour varier en fonction d'une distance en vigueur entre l'emplacement prédéterminé (P) et l'outil (30) ou entre l'emplacement prédéterminé (P) et l'appareil (58) de sciage de l'outil, l'unité de commande étant prévue pour déterminer la distance.

6. Système selon l'une quelconque des revendications 1 à 5, la diminution étant prévue pour avoir lieu lorsqu'il est établi dans l'unité de commande que l'écart en vigueur ou la distance en vigueur est inférieur(e) ou égal(e) à une valeur seuil prédéterminée.

7. Système selon l'une quelconque des revendications 1 à 6, la valeur ou le module du ou des paramètres d'exploitation étant prévus pour diminuer, à leur plus bas, jusqu'à un module ou une valeur qui garantit la continuation du fonctionnement motorisé de l'outil.

8. Engin mobile de travaux qui est un engin forestier, comportant :
- une flèche articulée qui est liée de façon tournante à l'engin mobile (10) de travaux,
- un outil (30) de traitement de troncs d'arbres monté de façon pivotante sur la flèche articulée (20) de telle manière que l'orientation de l'outil change lorsque l'outil subit une rotation commandable autour d'un axe (N) de rotation qui est orienté sensiblement verticalement,
- le système selon l'une quelconque des revendications 1 à 7 destiné à commander l'engin mobile de travaux, la flèche articulée et l'outil,
- l'engin mobile de travaux étant une débardeuse destinée à transférer du bois ou des troncs d'arbres, ou une récolteuse destinée à récolter et à transformer du bois ou des troncs d'arbres.

9. Procédé de commande d'un outil (30) de traitement de troncs d'arbres d'un engin mobile (10) de travaux, l'engin mobile (10) de travaux possédant une flèche articulée (20) et l'outil (30) de traitement de troncs d'arbres monté de façon pivotante sur la flèche articulée (20) de telle manière que l'orientation de l'outil change lorsque l'outil subit une rotation commandable autour d'un axe (N) de rotation qui est orienté sensiblement verticalement, la flèche articulée étant liée de façon tournante à l'engin mobile (10) de travaux doté en outre d'une unité (50) de commande qui commande l'engin mobile de travaux, la flèche articulée et l'outil, et un ou plusieurs capteurs (200) reliés fonctionnellement à l'unité de commande, le procédé comportant les étapes consistant à :
- maintenir un modèle de calcul dans l'unité de commande, le modèle de calcul se rapportant
- i) soit au fait de recevoir, dans l'unité de commande, des informations ou des données en provenance du ou des capteurs (200), les informations ou les données étant indicatives de l'orientation d'une direction prédéterminée (F) coïncidant avec une direction prédéterminée (S) de danger ou se situant à un angle fixe (FA) par rapport à la direction prédéterminée (S) de danger, ladite direction prédéterminée (S) de danger étant celle dans laquelle il est prévu qu'un morceau se détachant de l'outil (30) soit projeté pendant un fonctionnement motorisé de l'outil,
- le fonctionnement motorisé étant le tronçonnage d'un tronc d'arbre maintenu dans une position sensiblement verticale dans l'outil ou le tronçonnage du tronc d'arbre maintenu dans une position sensiblement horizontale dans l'outil, ou
- ii) soit au fait de recevoir, dans l'unité de commande, des informations ou des données en provenance du ou des capteurs (200), les informations ou les données étant indicatives de l'orientation d'une trajectoire prédéterminée (V) de danger suivant laquelle il est prévu que le morceau soit projeté pendant le fonctionnement motorisé de l'outil,
- soit à la fois à i) et ii) ;
- recevoir, en provenance du ou des capteurs (200), des informations ou des données indicatives de l'emplacement d'un emplacement prédéterminé (P) ;
- maintenir des données d'emplacement dans l'unité (50) de commande, les données d'emplacement définissant l'emplacement prédéterminé (P) qui se rapporte à l'un des éléments suivants : l'engin mobile de travaux, un lieu géographique, un objet au voisinage de l'outil, ou un emplacement au voisinage de l'outil ;
- déterminer automatiquement dans le modèle de calcul et d'après les données d'emplacement, pendant le fonctionnement motorisé de l'outil,
- i) soit un écart en vigueur entre la direction prédéterminée (S) de danger et l'emplacement prédéterminé (P) pendant le fonctionnement motorisé de l'outil,
- ii) soit une distance en vigueur entre la trajectoire prédéterminée (V) de danger et l'emplacement prédéterminé (P) pendant le fonctionnement motorisé de l'outil,
- soit à la fois i) et ii) ; et
**caractérisé par** :
- l'application automatique d'un mode de commande dans l'unité de commande en commandant le fonctionnement motorisé de l'outil selon une dépendance prédéterminée de telle manière qu'un ou plusieurs paramètres d'exploitation influençant le fonctionnement motorisé de l'outil varient en fonction de l'écart en vigueur ou de la distance en vigueur ;
- le ou les paramètres d'exploitation incluant un ou plusieurs des paramètres suivants :
- i) un couple généré dans un actionneur d'un appareil (58) de sciage dans l'outil, l'actionneur étant prévu pour entraîner une chaîne de scie,
- ii) un effort généré dans un actionneur de l'appareil de sciage, l'actionneur étant prévu pour entraîner une lame de scie en oscillation,
- iii) une vitesse de rotation générée dans un actionneur de l'appareil de sciage, l'actionneur étant prévu pour entraîner la chaîne de scie,
- iv) une vitesse générée dans un actionneur de l'appareil de sciage, l'actionneur étant prévu pour entraîner la lame de scie en oscillation ; et
- l'application du mode de commande en diminuant la valeur ou le module du ou des paramètres d'exploitation selon la dépendance prédéterminée lorsqu'il est établi dans l'unité de commande que l'écart en vigueur ou la distance en vigueur ont été diminués.
